(19) Europäisches Patentamt

European Patent Office

Office européen des brevets

(11) Veröffentlichungsnummer: **0 245 727 B1**

(12) **EUROPÄISCHE PATENTSCHRIFT**

(45) Veröffentlichungstag der Patentschrift: **10.06.92**

(21) Anmeldenummer: **87106374.9**

(22) Anmeldetag: **30.04.87**

(51) Int. Cl.⁵: **A21D 2/32**

(54) **Backmittel für Hefeteige.**

(30) Priorität: **16.05.86 DE 3616597**

(43) Veröffentlichungstag der Anmeldung:
**19.11.87 Patentblatt 87/47**

(45) Bekanntmachung des Hinweises auf die
Patenterteilung:
**10.06.92 Patentblatt 92/24**

(84) Benannte Vertragsstaaten:
**AT BE CH DE ES FR GB GR IT LI LU NL SE**

(56) Entgegenhaltungen:
**DE-A- 508 353**
**FR-A- 2 350 057**
**GB-A- 984 163**

**FOOD TECHNOLOGY, Band 22, 1968, Seiten
897-900; Y. POMERANZ et al.: "Natural and
modified phospholipids effects on bread
Ouality"**

**KIRK-OTHMER: "Encyclopedia of chemical
technology", Band 12, zweiten Auflage, 1967,
Seite 353, John Wiley & Sons, Inc., US**

(73) Patentinhaber: **Jodlbauer, Heinz D. Dr.
Alt Moabit 92
W-1000 Berlin 21(DE)**

Patentinhaber: **Kampffmeyer Mühlen GmbH
Haulander Hauptdeich 2
W-2102 Hamburg 93(DE)**

Patentinhaber: **Vereinigte Kunstmühlen AG
Meisenstrasse 32
W-8300 Ergolding(DE)**

Patentinhaber: **A. Nattermann & Cie. GmbH
Nattermannallee 1
W-5000 Köln 30(DE)**

(72) Erfinder: **Jodlbauer, Heinz D., Dr.
Alt Moabit 92
W-1000 Berlin 21(DE)**

(74) Vertreter: **Dipl.-Ing. H. Hauck, Dipl.-Ing. E.
Graalfs, Dipl.-Ing. W. Wehnert, Dr.-Ing. W. Döring
Neuer Wall 41
W-2000 Hamburg 36(DE)**

Rank Xerox (UK) Business Services

**Beschreibung**

Die Erfindung ist auf ein Backmittel für Hefeteige mit den Merkmalen des Oberbegriffes des Patentanspruchs 1 Verfahren zur Herstellung sowie die Verwendung eines solchen Backmittels.

Mit Hefe getriebene Backwaren, wie z.B. Brot und Kuchenwaren, werden aus Mehl hergestellt, das ganz oder zum größten Teil Weizenmehl ist. Die Qualität der Backwaren hängt besonders von der Qualität des Mehls und insbesondere von der Teigbearbeitung ab. Erst durch intensive Knetung des Teiges erhält der Kleber im Mehl die gewünschten Eigenschaften, wie große Dehnbarkeit, Elastizität und Gashaltevermögen.

Beim Übergang von der Handverarbeitung auf die maschinelle Verarbeitung ergaben sich viele Probleme bei der Teig-Herstellung. Erst durch Zusatz von Lipiden als Emulgatoren konnte man die Knettoleranz von Teigen erhöhen.

Untersucht man die Zusammensetzung der natürlicherseits im Weizenmehl vorkommenden Lipide, so findet man eine Reihe von Lipidkomponenten, die sich im Rohlecithin wiederfinden, wie z.B. Lysophosphatidylcholin, Phosphatidylcholin, N-Acylphosphatidylethanolamine, Phosphatidylinosid, Phosphatidsäure, Lysophosphatidsäure, Phosphatidylglycerol, Lysophosphatidylethanolamin, Lysophosphatidylglycerol, Diglyceride, Monoglyceride, Triglyceride, Stearine usw. Diese Weizenlipide spielen während der Teigbearbeitung eine nicht unerhebliche Rolle, diese Rolle kann sehr deutlich durch Zusatz von Lecithin bzw. synthetischen Emulgatoren verstärkt werden. Dabei können einzelne Komponenten wie auch das Verhältnis der einzelnen Phospholipide im Lecithin stören (L. Wassermann, Fette Seifen Anstrichmittel 1983, 85, 20; Y. Pomeranz, Food Techol 1970, 24, 928).

Die Wirkungsweise von Emulgatoren aus Lipiden, wie z.B. Lecithin in Form des sogenannten Rohlecithins, welches aus tierischen und pflanzlichen Materialien wie Eiern, Ölsaaten und Ölfrüchten wie z.B. Kokosnuß-Kopra, Palmkerne, Erdnüsse, Raps, Sonnenblumenkerne, Sojabohnen, Ölpalmen und Oliven, gewonnen wird (J. Eichberg, Kirk-Othmer, Encyclopedia of Chemical Technology Vol. 14 Seite 250-269), in Teigen und Backmassen ist eingehend untersucht worden (H.D. Jodlbauer ZLR 1977 (1) 33-45; Y. Pomeranz, cereal Chem. 1970, 47, 435 ff; Y. Pomeranz, Food Technol. 1970, 24, 928 ff; I.B.M. Coppock, J. Sci. Food Agr. 1954, 5, 19 ff; DE-PS 1183 452; J. Pomeranz in B.F. Szuhaj and G.R. List 'Lecithins' AOCS 1985).

Bereits in den vierziger Jahren wurde Lecithin in Mengen von 0,1 bis 0,5 %, auf Mehl gerechnet, beim Brotbacken verwendet (L. Wassermann, Fette Seifen Anstrichmittel 1983, 85, 120 ff; DE-PS 719268; W. Schäfer, Bäckerei Techn. 1972, 73 ff). Dabei machte sich die verbesserte Teigkonsistenz bei der Verarbeitung der Teige über Maschinen bemerkbar. Das eingesetzte handelsübliche Lecithin hat pastöse bis flüssige Konsistenz. Zur besseren Handhabung in der Bäckerei wird Lecithin auf mehlartige Bestandteile aufgezogen. Durch die schwankende Qualität und Zusammensetzung, bedingt durch die verschiedene Herkunft der eingesetzten Lecithine, ist jedoch nicht immer ein guter Backerfolg gewährleistet, so daß man verstärkt auf synthetische Emulgatoren überging.

Erst der Einsatz von synthetischen Emulgatoren, allein oder im Gemisch mit Lecithin, erlaubte Backwaren maschinell so herzustellen, daß Schwankungen in den Eigenschaften der Gebäcke kaum auftraten. Bevorzugte Emulgatoren sind Mono- und Diglyceride von Diacetylweinsäure oder Mono- und Diglyceride verestert mit Genußsäuren, wie Zitronensäure und Milchsäure sowie sonstige Emulgatoren, wie beispielsweise Polyglycerinester, teilweise oder vollständig verestert mit Fettsäuren.

Mit den synthetischen Emulgatoren werden immer gleich gute Eigenschaften erhalten. In jüngster Zeit geht jedoch das Bestreben dahin, Nahrungsmittel auf den Markt zu bringen, die frei von synthetischen Stoffen sind.

Ein Backmittel mit den Merkmalen des Oberbegriffs des Patentanspruchs 1 ist aus der Veröffentlichung von Pomeranz, Shogrem und Finney (Food Technoiogy, vol. 22, 1968, S. 897) beschrieben. Hierbei weist das bekannte Backmittel neben einer Fettkomponente und/oder Mehl, Zucker und ggf. weiteren üblichen Zusatzstoffen eine Phospholipidfraktion auf, die Phosphatidylcholin, Phosphatidylethanolamin und Phosphatidylinositol umfaßt. Schwerpunktmäßig ist dieser Veröffentlichung desweiteren zu entnehmen, daß das eingesetzte Backfett einen wesentlichen Einfluß auf das Backergebnis hat, während die quantitative Zusammensetzung der in dieser Veröffentlichung untersuchten Phospholipidfraktionen die beim Backen erzielten Effekte nur gering beeinflussen.

Der vorliegenden Erfindung liegt die Aufgabe zugrunde, ein Backmittel, das als Emulgator ein Naturprodukt enthält, für Hefeteige zu schaffen, das zu einem reproduzierbaren Backverhalten und zu verbesserten Eigenschaften der hiermit erstellten Backwaren führt.

Diese Aufgabe wird durch ein Backmittel mit den Merkmalen des Patentanspruchs 1 gelöst.

Das erfindungsgemäße Backmittel für Hefeteige, das eine Fettkomponente und/oder Mehl, Zucker sowie Phospholipide und ggf. weitere übliche Zusatzstoffe aufweist, enthält eine Phospholipidfraktion, die 8 - 17 Gew.-% Phosphatidylcholin, 18 - 26 Gew.-% Phosphatidylethanolamin und desweiteren Phosphatidylinositol, Lysophosphatidylcholin, Lysophosphatidylethanolamin, Lysophosphatidylinositol, Phosphatidsäure, Lysophosphatidsäure, Phosphatidylglycerol, Lysophosphatidylglycerol, N-Acylphosphatidylethanolamin, Lyso-N-Acylphosphatidylethanolamin sowie ggf. Sterine, Steringlykoside, Zucker und/oder Mono-, Di- oder Triglyceride umfaßt.

Die zuvor beschriebene Phospholipidfraktion wirkt in dem erfindungsgemäßen Backmittel als Emulgator. Als solcher ermöglicht diese Fraktion die Bildung einer Fett/wasser-Emulsion, so daß das Fett besser verteilt und die wasser-aufnahmefähigkeit des Teiges erhöht werden kann, was wiederum zu einer Verbesserung der Teigstruktur führt. Im Gegensatz zu herkömmlichen Emulgatoren, wie Diacetylweinsäureester, die das Wachstum der Hefe aktivieren, bis sich ein Gleichgewicht eingestellt hat, verändert die zuvor genannte Phospholipidfraktion die Teigstruktur durch Veränderung der Viskosität. Damit ist die Möglichkeit gegeben, daß der Teig das gleiche Volumen erreicht wie mit einem synthetischen Emulgator. Die einzelnen in der Fraktion enthaltenen Phospholipide wirken auf die Bestandteile des Mehls, wie Proteine, Stärke und Schleimstoffe ein, was viele Eigenschaftsverbesserungen bringt. So wird die Krume des fertigen Teiges weicher, das Volumen größer, die Poren feiner und die Porenwände dünner. Auch wird der Gärvorgang des Teiges beeinflußt, so daß eine Gärunterbrechung möglich wird. Die fertige Backware läßt sich besser aus der Form herausnehmen und die Frischhaltezeit sind verlängert. Die Ursachen für diese besonders guten Eigenschaftsverbesserungen sind bisher nicht geklärt.

Bevorzugt werden solche Ausführungsformen des erfindungsgemäßen Backmittels, bei denen die Phospholipidfraktionen 75 - 95 Gew.-% Phospholipide und 5 - 25 Gew.-% Sterine, Steringlykoside, Zucker und/oder Mo-, Di- oder Triglyceride enthält.

Besonders bevorzugt sind erfindungsgemäßen Backmittel mit Phospholipidfraktionen, die

| | |
|---|---|
| 8 - 17 Gew.-% | Phosphatidylcholin |
| 18 - 26 Gew.-% | Phosphatidylethanolamin |
| 10 - 18 Gew.-% | Phosphatidylinositol |
| 9 - 15 Gew.-% | Phosphatidsäure |
| 6 - 13 Gew.-% | N-Acylphosphatidylethanolamin |
| 2 - 12 Gew.-% | Lysophospholipide |
| 5 - 25 Gew.-% | Sonstige Phospholipide, Sterine, Steringlykoside, Zucker und Triglyceride, wobei vorzugsweise der Triglyceridgehalt maximal 5 % |

betragen solche

Die in dem erfindungsgemäßen Backmittel enthaltenen Phospholipidfraktionen können nach an sich bekannten Verfahren gemäß der DE-OS 30 47 048, der DE-OS 30 47 012 und der DE-OS 30 47 011 aus Sojabohnen, Raps, Sonnenblumenkernen und anderen Ölsaaten und Ölfrüchten, bevorzugt jedoch aus Sojabohnen, gewonnen werden.

Bevorzugt werden die Phospholipidfraktionen dadurch isoliert, daß man Rohlecithin (z.B. Sojarohlecithin) bei ca. 75°C mit Ethanol extrahiert. Die ethanollöslichen Bestandteile werden von den unlöslichen Bestandteilen abgetrennt und nach Sedimentation bei erniedrigter Temperatur gemäß der EP 0054770 einer Säulenchromatographie über Kieselgel unterzogen.

Die Bestandteile des Säulenvorlaufs werden mit den ethanolunlöslichen Bestandteilen der Extraktion vereinigt.

Nach Abdestillation des Restethanols wird der Rückstand in bekannter Weise mit Aceton entölt. Durch Variation der Extraktions- und Säulenchromatographiebedingungen kann die quantitative Zusammensetzung der Phospholipidfraktion je nach Bedarf eingestellt werden.

Die Menge der Phospholipidfraktion in dem erfindungsgemäßen Backmittel hängt von dem gewünschten Teig ab. In einem schweren Fettreichen Teig ist ein Backmittel mit einem größeren Anteil an Phospholipidfraktion erforderlich als für einen leichteren fettärmeren Teig. Die Phospholipidfraktion liegt allgemein in einer Menge im Bereich von 0,05 bis 25 % in dem Backmittel vor, vorzugsweise in einer Menge von 0,2 bis 7,5 %.

Das erfindungsgemäße Backmittel hat eine hohe Lagerstabilität. wenn man es mit einem Fett, das frei von Lipase und Lipoxigenase ist und einem Zuckergehalt von mindestens 40 % herstellt, so ist es garantiert mindestens 1 Jahr haltbar.

Die vorliegende Erfindung betrifft ferner Verfahren zur Herstellung des vorstehend beschriebenen Backmittels.

Ergänzend zum eingangs aufgeführten Stand der Technik wird noch auf die FR-A 23 50 057 und DE-A 508 353 verwiesen, die auf die Herstellung von entsprechenden Backmitteln gerichtet sind. Hierbei werden jedoch nicht die zuvor beschriebenen Phospholipidfraktionen eingesetzt, wie dies beim erfindungsgemäßen Backmittel der Fall ist.

Das erfindungsgemäße Backmittel kann in an sich bekannter Weise dadurch hergestellt werden, daß die Phospholipidfraktion mit der geschmolzenen Fettkomponente vermischt, das Mehl, der Zucker und gegebenenfalls weitere pulverförmige Bestandteile zugegeben und das Gemisch durch ständiges Umpumpen homogenisiert und dann abgekühlt wird.

Es ist wurde jedoch gefunden, daß sich durch die Art der Herstellung des erfindungsgemäßen Backmittels die Wirkung der zuvor beschriebenen Phospholipidfraktion noch verbessern läßt, wenn die Phospholipidfraktion in dem Fett oder dem Mehl feinstverteilt wird und das Gemisch in besonders kleinen Teilchen anfällt.

Eine optimale Verteilung der Phospholipidfraktion in der Fettkomponente wird erfindungsgemäß erreicht, wenn diese nach dem Homogenisieren in kristallisierter Form anfällt. Eine optimale Verteilung der Phospholipidfraktion in Mehl läßt sich dann erzielen, wenn die Phospholipidfraktion-Mehl-Mischung unter Bedingungen behandelt wird, bei denen sich die Phospholipide an die Stärke des Mehls anlagern und ein Phospholipid-Amylose-Amylopectin-Komplex gebildet wird.

Bei der zuerst genannten Möglichkeit wird bei einer ersten Verfahrensvariant des erfindungsgemäßen Verfahrens zunächst die Fettkomponente, die aus tierischen und/oder pflanzlichen Fetten bestehen kann, geschmolzen und die Phospholipidfraktion in die geschmolzene Masse eingerührt. Das Gemisch wird tiefkühlversprüht. Vorzugsweise verwendet man hierfür eine Düse, bei der ein Pulver einer Körnungsbreite im Bereich von 70 bis 500 $\mu$m anfällt. Besonders bevorzugt wird ein Fett-Phospholipidfraktion-Pulvergemisch, das zu 80 % eine Korngroße von etwa 250 $\mu$m hat. Das phospholipid-haltige Kristallfett-Pulver wird dann mit so viel pulverförmigen Komponenten vermischt, daß ein 50 %iges Fettkonzentrat anfällt. Dieses ist lagerfähig und kann sofort oder erst vor Verwendung mit den restlichen Bestandteilen der Backmittelrezeptur insbesondere dem Zucker und Mehl vermischt werden.

Bei der zweiten Ausführungsform des erfindungsgemäßen Verfahrens wird Mehl auf einen bestimmten Feuchtegrad von 18% bis 22% gebracht und mit enzymatisch aktivem Mehl und der Phospholipidfraktion bei einer Temperatur von 140°C bis 150°C durch einen Schneckenextruder geschickt. Unter den im Extruder herrschenden Bedingungen findet die Bildung des Phospholipid-Amylose-Amylopektin-Komplexes statt. Das den Extruder verlassende Produkt wird nachgetrocknet und dann zu einem Pulver gemahlen, das vorzugsweise eine Korngröße im Bereich von 500 $\mu$m hat. Dieses Phospholipid-Amylose-Amylopektin-Pulver wird dann mit der Fettkomponente in Form pulverförmigen, kristallisierten Fettes, dem Zucker und ggf. weiteren pulverförmigen Komponenten vermischt.

Vorzugsweise wird das erfindungsgemäße Backmittel in Hefeteigen in einer Menge von 2,5 - 15 Gew.-%, bezogen auf die eingesetzte Mehlmenge, verwendet.

Das erfindungsgemäße Backmittel wird anhand von vier Ausführungsbeispielen näher erläutert.

Beispiel 1

Herstellung eines Backmittels mit einer der zuvor beschriebenen Phospholipidfraktion nach bekanntem Verfahren.

Es wurde ein pastenförmiges Backmittel nachstehender Zusammensetzung hergestellt:

| Mehl Type 550 | 2 kg |
| Puderzucker | 8 kg |
| Fette | 6 kg |
| Lactose | 2 kg |
| Phospholipidfraktion | 2 kg |

Die Phospholipidfraktion hatte die nachstehende Zusammensetzung:

| | |
|---|---|
| Phosphatidylcholin | 13,7 |
| Phosphatidylethanolamin | 23,1 |
| Lysolecithin | 2,9 |
| Monophosphatidylinosit | 16,8 |
| N-Acyl-phosphatidylethanolamin | 5,4 |
| Phosphatidylsäure | 15,0 |
| Öl | 2,2 |
| Rest auf 100 % Triglyceride, Zucker und Stearine | |
| Säurezahl | 28 |
| Peroxidzahl | 0,1 |

Die Phospholipidfraktion wurde mit dem geschmolzenen Fett vermischt und bei 50°C mit den pulverförmigen Komponenten vereinigt und durch ständiges Umpumpen homogenisiert und langsam auf 20°C abgekühlt.

Es wurde ein Hefeteig nachstehender Zusammensetzung hergestellt: 2000 g Mehl Type 550, 1000 ml Wasser, 160 g Hefe und 30 g Salz. In diesen Teig wurden 500 g des vorstehend beschriebenen Backmittels in einem Hubkneter 15 Minuten lang eingeknetet. Teigruhezeit 20 Minuten, Teigausbeute 150, Teigeinlage 500 g, Gärzeit der Teigstücke 80/90 Min., Teigtemperatur 26°C, Ofentemperatur 200°C.

| Backergebnis: | | | |
|---|---|---|---|
| | Backmittel gemäß Beispiel 1 | Backmittel herkömmlicher Art | |
| | | Produkt 1*) | Produkt 2 **) |
| Gebäckvol. ml Normalgare | 2290 | 2240 | 2300 |
| Gebäckvol. ml Übergare | 2780 | 2570 | 2490 |
| Form | gute Wölbung | dto. | dto. |
| Porenbild | 5 | 5 | 5 |
| Krumenbeschaffenheit | etwas grob | etwas grob | etwas grob |
| Krumenelastizität | elastisch | noch elastisch | noch stabil |
| Geschmack | sehr gut abgerundet | noch abgerundet | noch abgerundet |

*) Produkt auf der Basis des Emulgntors Mono- und Diglyceride

**) Produkt auf der Basis der Emulgatorkombination Mono- und Diglyceride in Verbindung mit Rohlecithin und Diacetylweinsäureester

Beispiel 2

Herstellung eines Backmittels mit der in Beispiel 1 angegebenen Phospholipidfraktion nach einer Verfahrensvarianten.

Es wurde ein pulverförmiges Fettkonzentrat und damit ein Backmittel hergestellt.

Für das Fettkonzentrat wurden benötigt:

| | |
|---|---|
| Tierische und pflanzliche Fette, teilweise gehärtet | 45 % |
| Saccharose | 34 % |
| Salz | 7 % |
| Malzmehl | 3 % |
| Dextrinfraktionen | 5 % |
| Phospholipidfraktion | 6 % |

Die Fettkomponente wurde auf 65 bis 70°C erwärmt und die Phospholipidfraktion in das geschmolzene Fett eingemischt. Die homogene Mischung wurde in einer herkömmlichen Tiefkühlsprühanlage versprüht. Das erhaltene Fettpulver wurde mit den staubförmigen Komponenten vermischt, so daß ein 45 %iges Fettkonzentrat resultierte.

Mit diesem Fettkonzentrat wurde zu einem späteren Zeitpunkt ein Backmittel nach folgender Rezeptur hergestellt:

| Fettkonzentrat | 12 % |
|---|---|
| Saccharose | 4 % |
| Weizenmehl Type 550 | 84 % |

Beispiel 3

Herstellung eines Backmittels mit der in Beispiel 1 beschriebenen Phospholipidfraktion nach einer weiteren Verfahrensvarianten.

Es wurde ein pulverförmiges Backmittel über ein Lactose-Amylose-Amylopektin-Komplexpulver hergestellt. Dazu wurden benötigt:

| Weizenmehl Type 550 | 75 % |
|---|---|
| Malzmehl enzymaktiv | 5 % |
| Phospholipidfraktion | 20 % |

Die Eigenschaften des Weizenmehls sind:

| Proteingehalt i. Tr. | 13,1 % |
|---|---|
| Aschegehalt i. Tr. | 0,52 % |
| Wassergehalt | 14,2 % |
| lösliche Kohlenhydrate | 3,4 % |
| lösliches Protein i. Tr. | 3,45 % |

1000 kg dieses Weizenmehls wurden auf einen Feuchtigkeitsgehalt von 20 % gebracht. Dem Mehl wurde die Phospholipidfraktion eingemischt, das Gemisch in einem Zweischneckenextruder bei 145°C extrudiert.

Das Produkt wurde aus dem Extruder über eine 7 mm Düse ausgepreßt, nachgetrocknet und zu einem Pulver vermahlen, wovon 90 % eine Korngröße zwischen 150 und 250 $\mu$m hatte. Das Phospholipid-Amylose-Komplexpulver wurde zu einem Backmittel nachstehender Zusammensetzung verarbeitet:

| Phospholipid-Amylose-Komplexpulver | 15 % |
|---|---|
| Fettpulver, kristallisiert (60 % Fettgehalt) | 65 % |
| Malzmehl, enzymaktiv | 8 % |
| Sauermolkenpulver | 7 % |
| Salz | 5 % |

Die Herstellung dieses Backmittels erfolgte in einem üblichen Mischer.

Mit den Backmitteln der Beispiele 2 und 3 wurden die gleichen Backversuche wie bei Beispiel 1 beschrieben durchgeführt und ähnliche Backergebnisse im Rahmen der Fehlergrenze von Backversuchen erhalten.

Beispiel 4

Herstellung eines Backmittels mit der vorstehend genannten Phospholipidfraktion.

Es wurde ein pulverförmiges Fettkonzentrat und damit ein Backmittel wie in Beispiel 2 beschrieben, hergestellt. Für das Fettkonzentrat wurden benötigt:

| | |
|---|---|
| 49,5 kg | tierische und pflanzliche Fette, teilweise gehärtet |
| 37,4 kg | Saccharose |
| 7,7 kg | Salz |
| 8,8 kg | Enzympräparat auf der Basis Amylasen |
| 6,6 kg | Phospholipidfraktion |
| 110,0 kg | |

Das vorstehend beschriebene Backmittel (110 kg) wurde mit Mehl der Type 550 (890 kg) nach bekanntem Verfahren zu einem Fertigmehl vermischt.

Mit diesem Fertigmehl wurden verschiedene Gebäcke hergestellt.

a) Toastbrot

Es wurde ein Hefeteig nachstehender Zusammensetzung hergestellt: 1000 g des Fertigmehls, 540 g Wasser und 50 g Hefe.

Die Verarbeitungsbedingungen waren: Knetzeit 15 Minuten (Laborkneter), Teigruhezeit 10 + 10 Minuten, Teigausbeute 156, Teigeinlage 580 g, Gärzeit der Teigstücke 60 Minuten, Teigtemperatur 25°C, Ofentemperatur 240°C, Backzeit 40 Minuten.

| Backergebnis: | |
|---|---|
| Gebäckvol. ml Normalgare | 2150 |
| Form | normal |
| Porenbild | 6 - 7 |
| Krumenbeschaffenheit | fein |
| Krumenelastizität | elastisch |
| Geschmack | sehr gut abgerundet |

b) Große Plunderkragen

Hierfür wurden folgende Zutaten benötigt:

| Für den Teig: | 1000 g des Fertigmehls<br>450 g Wasser<br>50 g Hefe<br>600 g Ziehfett. |
|---|---|
| Für die Füllung: | 300 g Persipan<br>150 g Fett<br>150 g Zucker<br>50 g Ei. |

Zunächst wurde das Fertigmehl mit dem Wasser und der Hefe vermischt und dann die Mischung mit dem Ziehfett zu einem Plunderteig verarbeitet (3 einfache Touren). Der Plunderteig wurde zu 50 x 90 cm ausgerollt und in 6 Streifen a 50 x 15 cm geschnitten.

Die Zutaten für die Gebäckfüllung wurden angerührt und auf die Mitte der Teigstreifen gestrichen. Die Teigränder wurden mit Wasser bestrichen, der Teig übergeklappt, der Rand eingeschnitten und zu großen Plunderkragen auf das Blech gelegt. Die Backtemperatur war 210°C, die Backzeit 30 Minuten. Nach dem Backen wurden die Plunderkragen aprikotiert und glasiert.

Backergebnis:

Es wurden 6 große Plunderkragen mit hellgelber glänzender Oberfläche erhalten. Der Geschmack war abgerundet, arttypisch. Die Struktur war zart.

c) Schneckenstreifen

Hierfür wurden folgende Zutaten benötigt:

| Für den Teig: | 1000 g des Fertigmehls<br>450 g Wasser<br>60 g Hefe. |
|---|---|
| Für die Füllung: | 300 g Perispan<br>150 g Zucker<br>150 g Fett<br>100 g Ei. |

Das Fertigmehl wurde mit dem Wasser und der Hefe intensiv zu einem Teig verknetet und zu 2 Teigstücken einer Größe von ca. 50 x 30 cm (750 g) ausgerollt.

Die Zutaten der Gebäckfüllung wurden angerührt auf die beiden Teigstücke gestrichen. Beide Teigstücke wurden aufgerollt und der Teigstrang im Abstand von ca. 2 cm senkrecht tief eingeschnitten. Die so zu 3/4 abgeschnittenen Schnecken wurden nach rechts und links seitlich auseinandergelegt, mit Ei bestrichen und bei 3/4 Gare gebacken.

Die Backtemperatur war 210°C, die Backzeit 25 Minuten.

Nach dem Backen wurden die beiden Schneckenstreifen aprikotiert und glasiert.

Backergebnis:

Die Schneckenstreifen hatten abgerundeten, arttypischen Geschmack. Die Struktur war zart, der Biß kurz und zart.

**Patentansprüche**

1. Backmittel für Hefeteige, das eine Fettkomponente und/oder r Mehl, Zucker sowie Phospholipide und ggf. weitere übliche Zusatzstoffe aufweist, wobei die Phospholipide eine Fraktion enthalten, die Phosphatidylcholin, Phosphatidylethanolamin und Phosphatidylinositol umfaßt, dadurch gekennzeichnet, daß die Phospholipidfraktion 8 bis 17 Gew. % Phosphatidylcholin, 18 bis 26 Gew. % Phosphatidylethanolamin und als weitere Phospholipide Lysophosphatidylcholin, Lysonphosphatidylethanolamin, Lysophosphatidylinositol, Phosphatidsäure, Lysophosphatidsäure, Phosphatidylglycerol, Lysophosphatidylglycerol, N-Acylphosphatidylethanolamin, Lyso-N-Acylphosphatidylethanolamin sowie ggf. Sterine, Steringlykoside, Zucker und/oder Mono-, Di- oder Triglyceride enthält.

2. Backmittel nach Anspruch 1, dadurch gekennzeichnet, daß die Phospholipidfraktion

   10 - 18 Gew. %     Phosphatidylinositol,
   9 - 15 Gew. %     Phosphatidsäure,
   6 - 13 Gew. %     N-Acylphosphatidylethonolamin,
   2 - 12 Gew. %     Lysophospholipide und
   5 - 25 Gew. %     sonstige Phospholipide, Sterine, Steringlykoside, Zucker, Triglyceride

   enthält.

3. Backmittel nach Anspruch 1 oder 2, dadurch gekennzeichnet, daß die Phospholipidfraktion < 5 Gew. % Triglyceride enthält.

4. Backmittel nach eins der vorangehenden Ansprüche, dadurch gekennzeichnet, daß es die Phospholipidfraktlon in einer Menge von 0,05 bis 25 Gew. % enthält.

5. Backmittel nach Anspruch 4, dadurch gekennzeichnet, daß es die Phospholipidfraktion in einer Menge von 0,2 bis 7,5 Gew. % enthält.

6. Backmittel nach Anspruch I oder 2, dadurch gekennzeichnet, daS die Phospholipidfraktion 75 bis 95 Gew. % Phospholipide und 5 bis 25 Gew. % Sterine, Steringlykoside, Zucker und/oder Mono-, Di- oder Triglyceride enthält.

7. Verfahren zur Herstellung eines Backmittels nach eins der Ansprüche 1 bis 6, dadurch gekennzeichnet, daß die Phospholipidfraktion in die geschmolzene Fettkomponente homogen eingmischt wird, die homogene Mischung tiefkühlversprüht wird und das erhaltene kristallisierte Produkt mit dem Mehl, dem Zucker und ggf. weitere pulverförmigen Komponenten vermischt wird.

8

**8.** Verfahren zur Herstellung eines Backmittels nach einem der Ansprüche 1 bis 6, dadurch gekennzeichnet, daß die Phospholipidfraktion mit Weizenmehl eines Feuchtegrades von 18 bis 22 % und enzymatischem Mehl durch einen Schneckenextruder bei einer Temperatur von 140° C bis 150° C geschickt wird, daß das Extrudat zu Pulver vermahlen wird und mit der Fettkomponente in Form pulverförmigen kristallisierten Fetts, dem Zucker und ggf. weiteren pulverförmigen Komponenten vermischt wird.

**9.** Verwendung des Backmittels nach einem der Ansprüche 1 bis 6 in Hefeteigen in einer Menge von 2,5 bis 15 Gew. %, bezogen auf die eingesetzte Mehlmenge.

## Claims

**1.** A baking agent for leavened doughs comprising a fat component and/or flour, sugar and phospholipids and possibly further usual additives, wherein the phospholipids contain a fraction comprising phosphatidyl choline, phosphatidyl ethanolamine and phosphatidyl inositol, characterized in that the phospholipid fraction contains 8 to 17 % by weight phosphatidyl choline, 18 to 26 % by weight phosphatidyl ethanolamine and as further phospholipids lysophosphatidyl choline, lysophosphatidyl ethanolamine, lysophosphatidyl inositol, phosphatide acid, lysophosphatide acid, phosphatidyl glycerol, lysophosphatidyl glycerol, N-acylphosphatidyl ethanolamine, lyso-N-acylphosphatidyl ethanolamine and possibly sterines, sterine glycosides, sugar and/or monoglycerides, diglycerides or triglycerides.

**2.** The baking agent according to claim 1, characterized in that the phospholipid fraction contains

| 10 - 18 % by weight | phosphatidyl inositol, |
|---|---|
| 9 - 15 % by weight | phosphatide acid, |
| 6 - 13 % by weight | N-acylphosphatidyl ethanolamine, |
| 2 - 12 % by weight | lysophospholipids and |
| 5 - 25 % by weight | other phospholipids, sterines, sterine glycosides, sugar, triglycerides. |

**3.** The baking agent according to claim 1 or 2, characterized in that the phospholipid fraction contains < 5 % by weight triglycerides.

**4.** The baking agent according to one of the preceding claims, characterized in that it contains the phospholipid fraction in an amount of 0.05 to 25 % by weight.

**5.** The baking agent according to claim 4, characterized in that it contains the phospholipid fraction in an amount of 0.2 to 7.5 % by weight.

**6.** The baking agent according to claim 1 or 2, characterized in that the phospholipid fraction contains 75 to 95 % by weight phospholipids and 5 to 25 % by weight sterines, sterine glycosides, sugar and/or monoglycerides, diglycerides or triglycerides.

**7.** A process of producing a baking agent according to one of the claims 1 to 6, characterized in that the phospholipid fraction is homogeneously mixed into the melted fat component, the homogeneous mixture is freeze-sprayed, and the received crystallized product is mixed with the flour, the sugar and possibly further powder-like components.

**8.** The process of producing a baking agent according to one of the claims 1 to 6, characterized in that the phospholipid fraction is passed through a screw-type extrusion machine at a temperature of 140°C to 150°C with wheat flour of a degree of moisture of 18 to 22 % and with enzymatic flour, and that the extrusion product is ground to powder and is mixed with the fat component in the form of powder-like crystallized fat, the sugar and possibly further powder-like components.

**9.** The use of the baking agent according to one of the claims 1 to 6 in leavened doughs in an amount of 2.5 to 15 % by weight related to the used amount of flour.

## Revendications

**1.** Shortening pour pâtes levantes, qui contient un composant gras et/ou de la farine, du sucre, comme aussi des phospholipides et éventuellement d'autres additifs ou adjuvants usuels, où les phospholipides contiennent une fraction qui englobe la phosphatidylcholine, la phosphatidyléthanolamine et le phosphatidylinositol, caractérisé en ce que la fraction phospholipidique contient 8 à 17% en poids de phosphatidylcholine, 18 à 26% en poids de phosphatidyléthanolamine et, à titre d'autres phospholipides, de la lysophosphatidylcholine, de la lysophosphatidyléthanolamine, du lysophosphatidylinositol, de l'acide phosphatidique, de l'acide lysophosphatidique, du phosphatidylglycérol, du lysophosphatidylglycérol, de la N-acylphosphatidyléthanolamine, de la lyso-N-acylphosphatidyléthanolamine, comme éventuellement aussi des stérines, des stérineglucosides , des sucres et/ou des mono-, di- ou triglycérides.

2. Shortening suivant la revendication 1, caractérisé en ce que la fraction phospholipidique contient

| | |
|---|---|
| 10 à 18% | en poids de phosphatidylinositol, |
| 9 à 15% | en poids d'acide phosphatidique, |
| 6 à 13% | en poids de N-acylphosphatidyléthanolamine, |
| 2 à 12% | en poids de lysophospholipides et |
| 6 à 25% | en poids d'autres phospholipides, de stérines, de stérineglucosides, de sucres, de triglycérides. |

3. Shortening suivant la revendication 1 ou 2, caractérisé en ce que la fraction phospholipidique contient moins de 5% en poids de triglycérides.

4. Shortening selon l'une quelconque des revendications précedéntes, caractérisé en ce qu'il contient la fraction phospholipidique en une proportion de 0,5 à 25% en poids.

5. Shortening selon la revendication 4, caractérisé en ce qu'il contient la fraction phospholipidique en une proportion de 0,2 à 7,5% en poids.

6. Shortening selon la revendication 1 ou 2, caractérisé en ce que la fraction phospholipidique contient de 75 à 95% en poids de phospholipides et de 5 à 25% en poids de stérines, stérineglucosides, sucres et/ou mono-, di- ou triglycérides.

7. Procédé de préparation d'un shortening selon l'une quelconque des revendications 1 à 6, caractérisé en ce que l'on incorpore la fraction phospholipidique de manière homogène au composant gras fondu, on lyophilise ou pulvérise à basse température le mélange homogène et on mélange le produit cristallisé obtenu à la farine, au sucre et éventuellement aux autres composants pulvérulents.

8. Procédé de préparation d'un shortening selon l'une quelconque des revendications 1 à 6, caractérisé en ce que l'on fait passer la fraction phospholipidique avec de la farine de blé d'un degré d'humidité de 18 à 22% et de la farine enzymatique à travers une extrudeuse à vis à une température de 140°C à 150°C, on broie ou moud le produit extrudé obtenu en une poudre et on le mélange au composant gras sous la forme de graisse cristallisée pulvérulente, au sucre et éventuellement aux autres composants pulvérulents.

9. Utilisation du shortening selon l'une quelconque des revendications 1 à 6 dans des pâtes levantes en une proportion de 2,5 à 15% en poids, par rapport à la quantité de farine mise en oeuvre.